# EUROPÄISCHE PATENTANMELDUNG

(11) **EP 4 279 796 A1**
(43) Veröffentlichungstag der Anmeldung: **22.11.2023**
(21) Anmeldenummer: 23163456.9
(22) Anmeldetag: 22.03.2023
(51) Int. Cl.: F17C 9/00

(54) **KRYOTANKSYSTEM**

(30) Priorität: 17.05.2022 DE 102022204884
(71) Anmelder: MAGNA Energy Storage Systems GesmbH, 8261 Sinabelkirchen (AT)
(72) Erfinder: PUCHLEITNER, Rainer, 8052 Graz (AT); PUTSELYK, Sergiy, 7423 Pinkafeld (AT)
(74) Vertreter: Zangger, Bernd

(57) **Zusammenfassung**

Ein Kryotanksystem, umfassend eine erste Kryotankvorrichtung (31) und eine zweite Kryotankvorrichtung (32), wobei die erste Kryotankvorrichtung (31) einen ersten Kryotank (1) und die zweite Kryotankvorrichtung (32) einen zweiten Kryotank (1), insbesondere jeweils zur Aufnahme von Wasserstoff, umfasst, wobei die erste Kryotankvorrichtung (31) eine Entnahmeleitung (a) zum Speisen eines Verbrauchers umfasst und einen Drucksensor (9) zum Messen des Drucks im ersten Kryotank (1), wobei an einer ersten Abzweigung (33) ein Teilstrom der Entnahmeleitung (a) in eine Heizleitung (b) abzweigbar ist, wobei die Heizleitung (b) durch einen im ersten Kryotank (1) angeordneten ersten Wärmeübertrager (14) führt und nach dem ersten Wärmeübertrager (14) an einer zweiten Abzweigung (34) in die Entnahmeleitung (a) zurückführt, wobei die erste Kryotankvorrichtung (31) zumindest ein Schaltelement (15) umfasst, dass dazu eingerichtet ist, dass abhängig von dem durch den Drucksensor (9) gemessenen Druck im ersten Kryotank (1) der erste Wärmeübertrager (14) aktiviert oder deaktiviert wird, wobei der erste Kryotank (1) über eine erste Füllleitung (d) befüllbar ist und der zweite Kryotank (1) über eine zweite Füllleitung (d) befüllbar ist, wobei eine Verbindungsleitung (f) zur Verbindung der ersten Füllleitung (d) mit der zweiten Füllleitung (d) eingerichtet ist.

## Beschreibung

### Gebiet der Erfindung

Die vorliegende Erfindung betrifft ein Kryotanksystem, umfassend eine erste Kryotankvorrichtung und eine zweite Kryotankvorrichtung, wobei die erste Kryotankvorrichtung einen ersten Kryotank und die zweite Kryotankvorrichtung einen zweiten Kryotank, insbesondere jeweils zur Aufnahme von Wasserstoff, umfasst.

### Stand der Technik

Kryotanksysteme, die einen Kryotank zur Aufnahme von Wasserstoff umfassen, sind bekannt und werden insbesondere als mobile Kryotanksysteme, beispielsweise in Kraftfahrzeugen, eingesetzt. Jeder Kryotank kann einen Innenbehälter und einen Außenbehälter umfassen, wobei zwischen Innenbehälter und Außenbehälter ein isolierender Vakuumraum eingerichtet sein kann.

Kryotanksysteme können auch mehrere, beispielsweise zwei Kryotanks zur Aufnahme von Wasserstoff umfassen. Jeder der Kryotanks muss dann auch befüllt werden können, wozu üblicherweise mehrere getrennte Füllleitungen vorgesehen sind.

Zur Regelung des Druckes in einem Kryotank, insbesondere während oder nach der Entnahme von Wasserstoff aus dem Kryotank, können Druckregelvorrichtungen vorgesehen sein, beispielsweise eine elektrische Heizung im Kryotank oder eine Rezirkulierleitung, durch welche entnommener und erwärmter Wasserstoff teilweise in den Kryotank zurückgeleitet wird, um die Temperatur und somit den Druck im Kryotank zu erhöhen.

### Zusammenfassung der Erfindung

Es ist eine Aufgabe der Erfindung, ein Kryotanksystem der genannten Art anzugeben, dass zumindest zwei Kryotanks umfasst, wobei eine einseitige Betankung und ein einfacher Betrieb des Systems aus mehreren insbesondere mobilen kryogenen Flüssigwasserstofftanks ermöglicht werden soll. Dabei soll auch eine Betankung mittels superkritischem Wasserstoff und unterkühltem Wasserstoff möglich sein.

Die Lösung der Aufgabe erfolgt durch ein Kryotanksystem umfassend eine erste Kryotankvorrichtung und eine zweite Kryotankvorrichtung, wobei die erste Kryotankvorrichtung einen ersten Kryotank und die zweite Kryotankvorrichtung einen zweiten Kryotank, insbesondere jeweils zur Aufnahme von Wasserstoff, umfasst, wobei die erste Kryotankvorrichtung eine Entnahmeleitung zum Speisen eines Verbrauchers umfasst und einen Drucksensor zum Messen des Drucks im ersten Kryotank, wobei an einer ersten Abzweigung ein Teilstrom der Entnahmeleitung in eine Heizleitung abzweigbar ist, wobei die Heizleitung durch einen im ersten Kryotank angeordneten ersten Wärmeübertrager führt und nach dem ersten Wärmeübertrager an einer zweiten Abzweigung in die Entnahmeleitung zurückführt, wobei die erste Kryotankvorrichtung zumindest ein Schaltelement umfasst, dass dazu eingerichtet ist, dass abhängig von dem durch den Drucksensor gemessenen Druck im ersten Kryotank, der erste Wärmeübertrager aktiviert oder deaktiviert wird, wobei der erste Kryotank über eine erste Füllleitung befüllbar ist und der zweite Kryotank über eine zweite Füllleitung befüllbar ist, wobei eine Verbindungsleitung zur Verbindung der ersten Füllleitung mit der zweiten Füllleitung eingerichtet ist. Erfindungsgemäß umfasst ein Kryotanksystem zwei Kryotankvorrichtungen mit jeweils einem Kryotank, nämlich eine erste Kryotankvorrichtung mit einem ersten Kryotank und eine zweite Kryotankvorrichtung mit einem zweiten Kryotank. Dabei weist die erste Kryotankvorrichtung ein Schaltelement auf, mit welchem, abhängig von dem durch einen Drucksensor gemessenen Druck im ersten Kryotank, ein erster Wärmeübertrager im ersten Kryotank aktiviert oder deaktiviert werden kann, so dass über den Wärmeübertrager das Medium im ersten Kryotank erwärmt und somit der Druck im ersten Kryotank gesteuert werden kann. Der erste Wärmeübertrager im ersten Kryotank kann bevorzugt dadurch aktiviert oder deaktiviert werden, dass über das Schaltelement das durch die Entnahmeleitung strömende Fluid zum ersten Wärmeübertrager, beispielsweise teilweise oder vollständig, abgezweigt wird, oder nicht. Der derart druckregelbare erste Kryotank ist erfindungsgemäß mit einem zweiten Kryotank verbunden, in dem eine Verbindungsleitung zur Verbindung der ersten Füllleitung mit der zweiten Füllleitung eingerichtet ist.

Die Kryotanks können insbesondere zur Aufnahme eines flüssigen, gasförmigen oder superkritischen Wasserstoffs vorgesehen sein und die Entnahmeleitung kann zur Entnahme von gasförmigem oder superkritischem Wasserstoff zum Speisen eines Verbrauchers eingerichtet sein.

Das vorliegende duale Tanksystem kann zwei, bevorzugt im wesentlichen baugleiche Tanksysteme verwenden, die mittels einer kryogenen Verbindungsleitung verbunden sind. Diese, vorzugsweise vakuum-isolierte Verbindungsleitung, ermöglicht einen Transfer von kryogenem Fluid von einem Kryotank in den anderen.

Dabei können Absperrventile in den Füllleitungen und/oder in der Verbindungsleitung eine serielle oder parallele Betankung von beiden Tanks ermöglichen.

Der Druckregelung der beiden Tanks kann entweder separat gesteuert werden oder von einem Tank aus, zum Beispiel vom ersten Kryotank aus.

Die vorliegende Erfindung erlaubt somit eine Betankung von mehreren kryogenen Tanks eines mobilen kryogenen Tanksystemen zur Wasserstoffspeicherung von einer Seite aus, von einem Füllstutzen aus, und ermöglicht nicht nur die Betankung mittels zwei- oder mehrphasiger Wasserstoffgemische sondern auch eine Betankung mittels superkritischem Wasserstoff und unterkühltem Wasserstoff, sowie einen einfachen Betrieb des Multitanksystems.

Weiterbildungen der Erfindung sind in den abhängigen Ansprüchen, der Beschreibung sowie den beigefügten Zeichnungen angegeben.

Vorzugsweise ist ein zweiter Wärmeübertrager an der Entnahmeleitung zwischen dem ersten Kryotank und der ersten Abzweigung angeordnet, wobei der zweite Wärmeübertrager bevorzugt von einem warmen Fluid erwärmt wird, beispielsweise von Wasser oder einer G40 (Glysantin G40) Mischung.

Bevorzugt ist ein dritter Wärmeübertrager an der Heizleitung zwischen dem ersten Wärmeübertrager und der zweiten Abzweigung angeordnet, also nach dem Wärmeübertrager, wobei der dritte Wärmeübertrager bevorzugt von einem warmen Fluid erwärmt wird, beispielsweise von Wasser oder einer G40 Mischung. Das Schaltelement zweigt einen Teil des Wasserstoffstroms nach dem zweiten Wärmeübertrager zum ersten Wärmeübertrager ab, wo der warme Wasserstoff wieder gekühlt wird. Danach kann der kalte Wasserstoffstrom im dritten Wärmeübertrager auf Umgebungstemperatur aufgewärmt und beispielsweise dem restlichen Teil des Wasserstoffstroms wieder zugespeist werden.

Vorzugsweise ist an der Füllleitung, bevorzugt an jeder Füllleitung, besonders bevorzugt nach der Abzweigung der Verbindungsleitung und vor dem ersten Kryotank, ein Ventil vorgesehen, bevorzugt ein Schaltventil. Alternativ oder zusätzlich können an der Verbindungsleitung ein oder zwei Ventile, insbesondere Schaltventile, vorgesehen sein. Die Druckregelung der beiden Tanks kann damit entweder separat gesteuert werden, wenn beide Schaltventile geschlossen sind, oder von einem Tank aus gesteuert werden, beispielsweise von der ersten Kryotankvorrichtung aus, wenn beide Ventile geöffnet sind.

Der Begriff "Ventil" kann im Rahmen dieser Erfindung bevorzugt ein Schaltventil sein. Durch ein Ventil kann ein Durchfluss zumindest gesperrt oder je nach Bauart auch reduziert werden.

Vorzugsweise ist der erste Wärmeübertrager durch ein Rohr gebildet, wobei das Rohr bevorzugt innen und / oder außen Rippen aufweist.

Bevorzugt ist der erste Kryotank, zusammen mit dem ersten Wärmeübertrager und bevorzugt auch mit dem zweiten Wärmeübertrager, im Inneren eines thermisch isolierenden Gehäuses angeordnet, wobei zumindest die Entnahmeleitung das Gehäuse durchdringend nach außen geführt ist. Das Schaltelement kann außerhalb des Gehäuses oder innerhalb des Gehäuses angeordnet sein. Das Innere des Gehäuses kann zudem Ventile oder hydrodynamischen Impedanzen aufnehmen. Der zweite Wärmeübertrager kann auch außerhalb des Gehäuses angeordnet sein.

Bevorzugt ist der dritte Wärmeüberträger außerhalb des Gehäuses angeordnet. Er kann auch innerhalb des Gehäuses angeordnet sein. Der Drucksensor ist bevorzugt ebenfalls außerhalb des Gehäuses angeordnet oder auch innerhalb des Gehäuses angeordnet.

Vorzugsweise weist das Gehäuse einen Füllanschluss und einen Entgasungsanschluss auf, wobei der Füllanschluss mit der Füllleitung und der Entgasungsanschluss mit einer Entgasungsleitung verbunden ist.

Bevorzugt ist zumindest eine der Entnahme-, Füll- und Entgasungsleitung, beispielsweise die Entnahmeleitung und die Entgasungsleitung, mit zumindest einem das Gehäuse durchdringenden Überdruckablass versehen.

Vorzugsweise umfasst die erste Kryotankvorrichtung einen elektrischen Heizer, wobei der elektrischen Heizer thermisch an den ersten Kryotank angebunden ist und bevorzugt zwischen dem ersten Kryotank und dem Gehäuse angeordnet ist.

Das Schaltelement der ersten Kryotankvorrichtung kann zwei Funktionen erfüllen, nämlich die Verteilung des Hauptstroms vom ersten Kryotank über die Entnahmeleitung auf Ströme einerseits zum Druckregelungssystem über die Heizleitung und andererseits des restlichen Stroms zum Verbraucher weiter über die Entnahmeleitung, sowie auch die Erzeugung von Druckverlusten in der Entnahmeleitung, damit die Druckverluste in dem Druckaufbausystem, das heißt in der Heizleitung und im ersten und dritten Wärmeüberträger ausgeglichen werden.

Das Schaltelement kann bevorzugt durch ein 3/2 Wege-Ventil mit einem integrierten Druckverlustelement gebildet werden, dass an der ersten oder zweiten Abzweigung angeordnet ist. Vorzugsweise ist das 3/2 Wege-Ventil somit vor dem ersten Wärmeübertrager oder gegebenenfalls nach dem dritten Wärmeübertrager angeordnet.

Gemäß einer Ausführungsform umfasst das Schaltelement zwei Ventile, nämlich ein Ventil am Eingang zum Druckregelungssystem in der Heizleitung und das andere Ventil im Hauptstrom in der Entnahmeleitung, oder das Schaltelement umfasst zwei Ventile, nämlich ein Ventil am Ausgang vom Druckregelungssystem in der Heizleitung und das andere Ventil im Hauptstrom in der Heizleitung.

Gemäß einer anderen Ausführungsform umfasst das Schaltelement ein Ventil am Eingang vom Druckregelungssystem in der Heizleitung, also am Eingang der Heizleitung nach der ersten Abzweigung, und eine hydrodynamische Impedanz, zum Beispiel eine Blende, im Hauptstrom der Entnahmeleitung, oder ein Ventil am Ausgang vom Druckregelungssystem in der Heizleitung, also am Ausgang der Heizleitung vor der zweiten Abzweigung, und eine hydrodynamische Impedanz, zum Beispiel eine Blende, im Hauptstrom der Entnahmeleitung.

Gemäß einer anderen Ausführungsform umfasst das Schaltelement ein Ventil im Hauptstrom der Entnahmeleitung und eine hydrodynamische Impedanz, zum Beispiel eine Blende, am Eingang vom Druckregelungssystem in der Heizleitung, also am Eingang der Heizleitung nach der ersten Abzweigung, oder ein Ventil im Hauptstrom der Entnahmeleitung und eine hydrodynamische Impedanz, zum Beispiel eine Blende, am Ausgang vom Druckregelungssystem in der Heizleitung, also am Ausgang der Heizleitung vor der zweiten Abzweigung, oder das Schaltelement wird durch lediglich ein Ventil im Hauptstrom der Entnahmeleitung gebildet.

Vorzugsweise ist die zweite Kryotankvorrichtung im Wesentlichen baugleich zur ersten Kryotankvorrichtung ausgebildet, weist also die selben zuvor beschriebenen Komponenten auf, wie die erste Kryotankvorrichtung. Insbesondere kann die zweite Kryotankvorrichtung ebenfalls ein Druckregelungssystem wie für die erste Kryotankvorrichtung beschrieben aufweisen. Eine Entgasungsleitung kann dabei auch nur an einer der beiden Kryotankvorrichtungen vorgesehen sein, beispielsweise an der ersten Kryotankvorrichtung. Das Gas kann daher, wenn notwendig, nur von einer Seite aus abgeführt werden.

Bevorzugt ist der Drucksensor an der Entnahmeleitung angeschlossen.

Bevorzugt ist ein Ventil in der Entgasungsleitung angeordnet. In diesem Fall kann der Entgasungsanschluss einfach ausgebildet sein, beispielsweise mit einer Dichtung für Wasserstoffgas.

### Kurzbeschreibung der Zeichnungen

Die Erfindung wird im Folgenden beispielhaft unter Bezugnahme auf die Zeichnungen beschrieben.
- Fig. 1: ist eine schematische Darstellung eines erfindungsgemäßen Kryotanksystems.
- Fig. 2: ist eine schematische Darstellung, welche das Druckregelungssystem an der Heizleitung eines Kryotanksystems gemäß Fig. 1 in einer ersten Ausführungsform zeigt.
- Fig. 3: ist eine schematische Darstellung, welche das Druckregelungssystem an der Heizleitung eines Kryotanksystems gemäß Fig. 1 in einer zweiten Ausführungsform zeigt.
- Fig. 4: ist eine schematische Darstellung, welche das Druckregelungssystem an der Heizleitung eines Kryotanksystems gemäß Fig. 1 in einer dritten Ausführungsform zeigt.
- Fig. 5: ist eine schematische Darstellung, welche das Druckregelungssystem an der Heizleitung eines Kryotanksystems gemäß Fig. 1 in einer vierten Ausführungsform zeigt.
- Fig. 6: ist eine schematische Darstellung, welche das Druckregelungssystem an der Heizleitung eines Kryotanksystems gemäß Fig. 1 in einer fünften Ausführungsform zeigt.
- Fig. 7: ist eine schematische Darstellung, welche das Druckregelungssystem an der Heizleitung eines Kryotanksystems gemäß Fig. 1 in einer sechsten Ausführungsform zeigt.
- Fig. 8: ist eine schematische Darstellung, welche das Druckregelungssystem an der Heizleitung eines Kryotanksystems gemäß Fig. 1 in einer siebenten Ausführungsform zeigt.

### Detaillierte Beschreibung der Erfindung

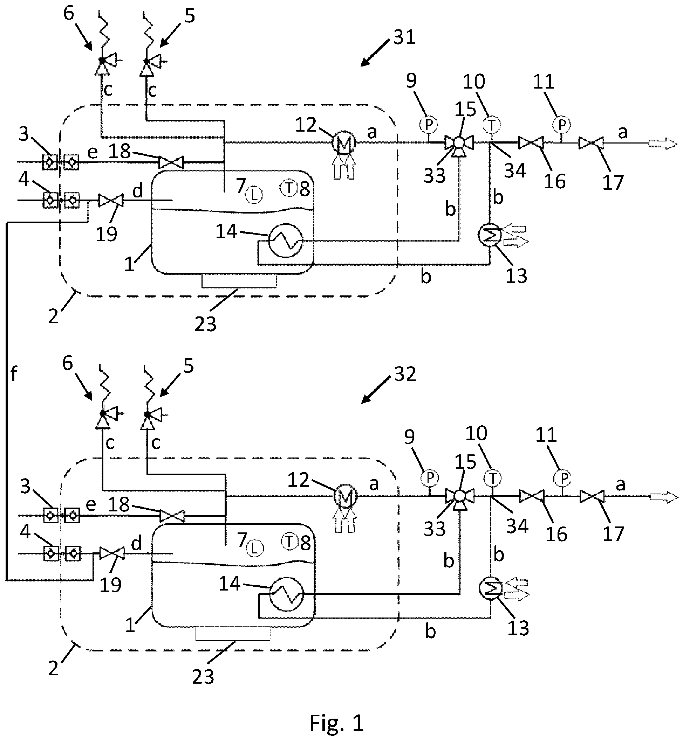

In Fig. 1 ist eine erfindungsgemäßes Kryotanksystem dargestellt.

Das Kryotanksystem umfasst eine erste Kryotankvorrichtung 31 und eine zweite Kryotankvorrichtung 32, wobei die erste Kryotankvorrichtung 31 einen ersten Kryotank 1 und die zweite Kryotankvorrichtung 32 einen zweiten Kryotank 1, insbesondere jeweils zur Aufnahme von Wasserstoff, umfasst.

Dabei ist die zweite Kryotankvorrichtung 32 im Wesentlichen baugleich zur ersten Kryotankvorrichtung 31 ausgebildet, weist also die selben Komponenten auf, wie die erste Kryotankvorrichtung 31. Die folgende Beschreibung der Komponenten bezieht sich zwar auf die erste Kryotankvorrichtung 31, gilt somit aber auch für die zweite Kryotankvorrichtung 32.

Der erste Kryotank 1 ist über eine erste Füllleitung d befüllbar und der zweite Kryotank 1 ist über eine zweite Füllleitung d befüllbar. Eine Verbindungsleitung f ist zur Verbindung der ersten Füllleitung d mit der zweiten Füllleitung d eingerichtet ist.

An der Füllleitung d ist, nach der Abzweigung der Verbindungsleitung f und vor dem ersten Kryotank 1, ein Ventil 19 vorgesehen. Bei geschlossenem Ventil 19 gelangt das an der Füllleitung d zugeführte Medium lediglich in die Verbindungsleitung f und somit zum anderen Kryotank 1, bzw. in den anderen Kryotank 1 sofern dessen Ventil 19 nicht geschlossen ist.

Die erste Kryotankvorrichtung 31 umfasst eine Entnahmeleitung a zum Speisen eines Verbrauchers (am rechten Ende der Entnahmeleitung a, angedeutet in Fig. 1 durch einen Pfeil nach rechts). Ein Drucksensor 9 ist zum Messen des Drucks im ersten Kryotank 1 an der Entnahmeleitung a angeordnet.

An einer ersten Abzweigung 33 ist ein Teilstrom der Entnahmeleitung a in eine Heizleitung b abzweigbar. Die Heizleitung b führt durch einen im ersten Kryotank 1 angeordneten ersten Wärmeübertrager 14 und nach dem ersten Wärmeübertrager 14 an einer zweiten Abzweigung 34 in die Entnahmeleitung a zurück.

Die erste Kryotankvorrichtung 31 umfasst zumindest ein Schaltelement 15, dass dazu eingerichtet ist, dass abhängig von dem durch den Drucksensor 9 gemessenen Druck im ersten Kryotank 1 der erste Wärmeübertrager 14 aktiviert oder deaktiviert wird, wobei die Aktivierung und Deaktivierung des Wärmeübertragers 14 dadurch erfolgt, dass mittels des Schaltelements 15 zumindest ein Teilstrom aus der Entnahmeleitung a in die Heizleitung b und somit zum Wärmeübertrager 14 geleitet wird, oder nicht geleitet wird.

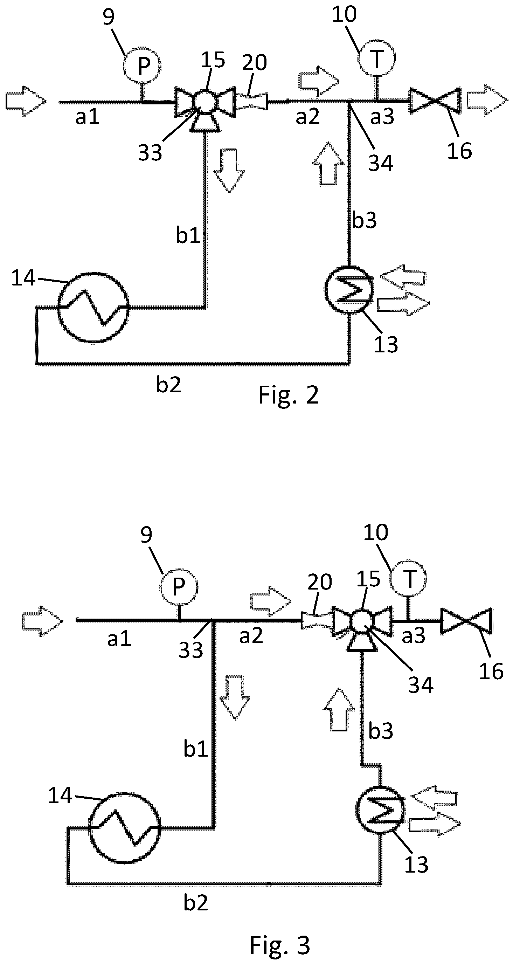

Die Rückführung des Mediums aus der Entnahmeleitung a über die Heizleitung b mit dem Wärmeübertrager 14 mittels Schaltelement 15 bildet ein Druckregelungssystem aus. Verschiedene Varianten des Schaltelements 15 und somit von Druckregelungssystemen sind in den Fig. 2 bis Fig. 8 dargestellt.

Der erste Wärmeübertrager 14 ist durch ein Rohr gebildet, wobei das Rohr innen und / oder außen Rippen aufweisen kann.

Ein zweiter Wärmeübertrager 12 ist an der Entnahmeleitung a zwischen dem ersten Kryotank 1 und der ersten Abzweigung 33 angeordnet, wobei der zweite Wärmeübertrager 12 von einem warmen Fluid erwärmt wird, beispielsweise von Wasser oder einer G40 Mischung.

Ein dritter Wärmeübertrager 13 ist an der Heizleitung b zwischen dem ersten Wärmeübertrager 14 und der zweiten Abzweigung 34 angeordnet, wobei der dritte Wärmeübertrager 13 von einem warmen Fluid erwärmt wird, beispielsweise von Wasser oder einer G40 Mischung.

Der erste Kryotank 1 ist, zusammen mit dem ersten Wärmeübertrager 14 und mit dem zweiten Wärmeübertrager 12, im Inneren eines thermisch isolierenden Gehäuses 2 angeordnet. Die Entnahmeleitung a ist durch das Gehäuse 2 nach außen geführt. Das Gehäuse 2 weist einen Füllanschluss 4 und einen Entgasungsanschluss 3 auf, wobei der Füllanschluss 4 mit der Füllleitung d, und der Entgasungsanschluss 3 mit einer Entgasungsleitung e, verbunden ist. Ein Ventil 18 ist in der Entgasungsleitung e angeordnet. Das Schaltelement 15, der dritte Wärmeüberträger 13 und der Drucksensor 9 sind außerhalb des Gehäuses 2 angeordnet. Ein Ventil 18 ist in der Entgasungsleitung e angeordnet.

An der Entnahmeleitung a sind außer dem Drucksensor 9 noch ein weiterer Drucksensor 11 und ein Temperatursensor 10 angeordnet. Der Temperatursensor 10 ist nach dem Schaltelement 15 und vor dem Ventil 16 angeordnet, der weitere Drucksensor 11 ist nach dem Ventil 16 und einem weiteren Ventil 17 an der Entnahmeleitung a angeordnet. Nach dem Ventil 17 führt die Entnahmeleitung a zu einem Verbraucheranschluss und/oder zu einem Verbraucher.

Im ersten Kryotank 1 ist zudem ein Füllstandssensor 7 und ein Temperatursensor 8 angeordnet.

Die erste Kryotankvorrichtung 31 umfasst auch einen elektrischen Heizer 22, wobei der elektrischen Heizer 22 thermisch an den ersten Kryotank 1 angebunden ist und zwischen dem ersten Kryotank 1 und dem Gehäuse 2, innerhalb des Gehäuses 2, angeordnet ist.

Die Entnahmeleitung a und Entgasungsleitung e sind über Überdruckleitungen c mit einem das Gehäuse 2 durchdringenden Überdruckablass 5, 6 versehen.

Fig. 2 zeigt das Druckregelungssystem an der Heizleitung eines Kryotanksystems gemäß Fig. 1 in einer ersten Ausführungsform. Das Schaltelement 15 ist als 3/2 Wege-Ventil mit einem integrierten Druckverlustelement 20 ausgebildet und an der ersten Abzweigung 33 angeordnet. In der Ausführungsform der Fig. 3 ist das 3/2 Wege-Ventil an der zweiten Abzweigung 34 angeordnet.

Für die Entnahmeleitung a ist in den Fig. 2 bis 8 eine Einteilung in einen ersten Abschnitt a1 bis zur ersten Abzweigung 33, einen zweiten Abschnitt a2 zwischen erster Abzweigung 33 und zweiter Abzweigung 34, und einen dritten Abschnitt a3 nach der zweiten Abzweigung 34, dargestellt. Für die Heizleitung b ist in den Fig. 2 bis 8 eine Einteilung in einen ersten Abschnitt b1 von der ersten Abzweigung 33 bis zum ersten Wärmetauscher 14, einen zweiten Abschnitt b2 vom ersten Wärmetauscher 14 bis zum dritten Wärmetauscher 13, und einen dritten Abschnitt b3 nach dem dritten Wärmetauscher 13 bis zur zweiten Abzweigung 34, dargestellt.

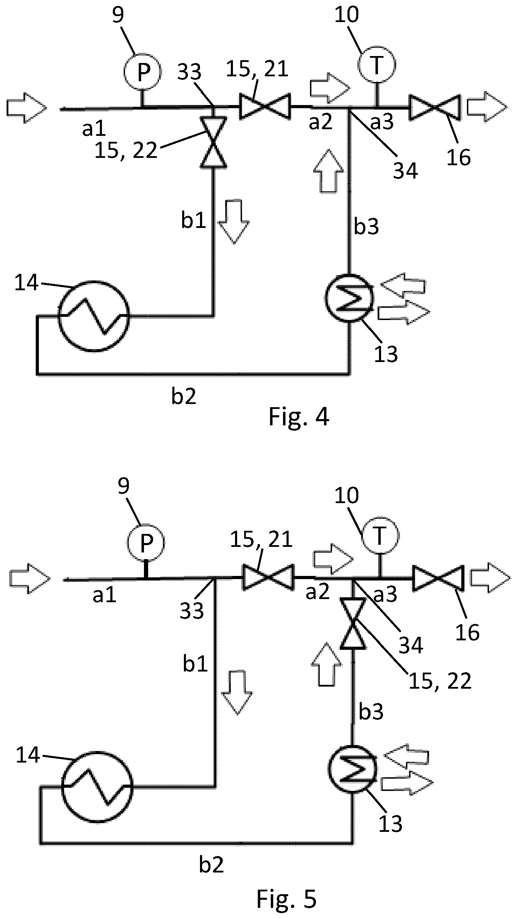

Fig. 4 zeigt eine Ausführung bei der das Schaltelement 15 zwei Ventile 21, 22 umfasst, nämlich ein Ventil 22 am Eingang zum Druckregelungssystem in der Heizleitung b1 und das andere Ventil, 21, im Hauptstrom in der Entnahmeleitung a2, nämlich im zweiten Abschnitt der Entnahmeleitung a2, der zwischen den beiden Abzweigungen 33, 34 liegt.

Ähnlich ist in Fig. 5 das Ventil 22 am Ausgang vom Druckregelungssystem in der Heizleitung b3 angeordnet und das andere Ventil, 21, im Hauptstrom in der Heizleitung a2.

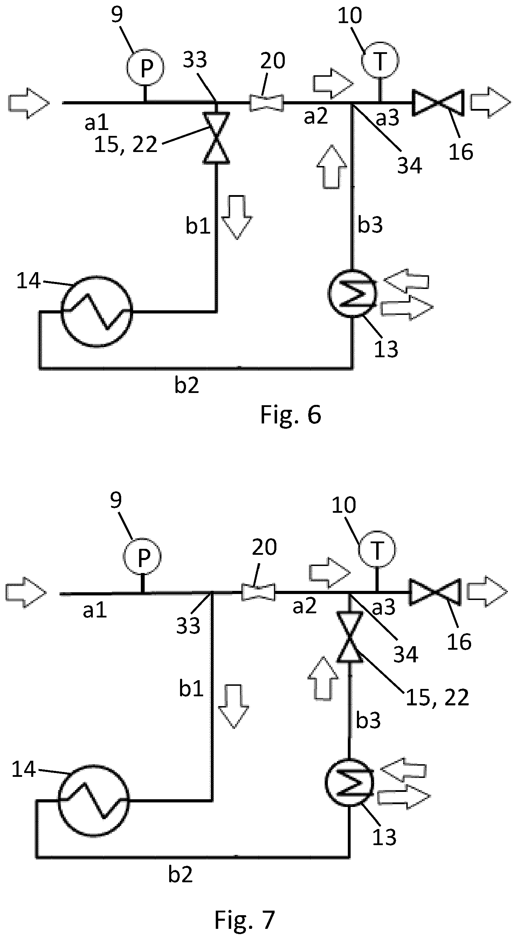

Fig. 6 zeigt eine Ausführungsform wobei das Schaltelement 15 ein Ventil 22 am Eingang vom Druckregelungssystem in der Heizleitung b1 und eine hydrodynamische Impedanz 20, zum Beispiel eine Blende, im Hauptstrom der Entnahmeleitung a2 angeordnet ist.

In Fig. 7 ist ein Ventil 22 am Ausgang vom Druckregelungssystem in der Heizleitung b3 und eine hydrodynamische Impedanz 20, zum Beispiel eine Blende, im Hauptstrom der Entnahmeleitung a2 angeordnet.

In einer weiteren, hier nicht dargestellten Ausführungsform ist das Schaltelement 15 ein Ventil 22 im Hauptstrom der Entnahmeleitung a2 und eine hydrodynamische Impedanz 20, zum Beispiel eine Blende, ist am Eingang vom Druckregelungssystem in der Heizleitung b1 angeordnet. Alternativ kann auch ein Ventil 22 im Hauptstrom der Entnahmeleitung a2 und eine hydrodynamische Impedanz 20, zum Beispiel eine Blende, am Ausgang vom Druckregelungssystem in der Heizleitung b3 angeordnet sein.

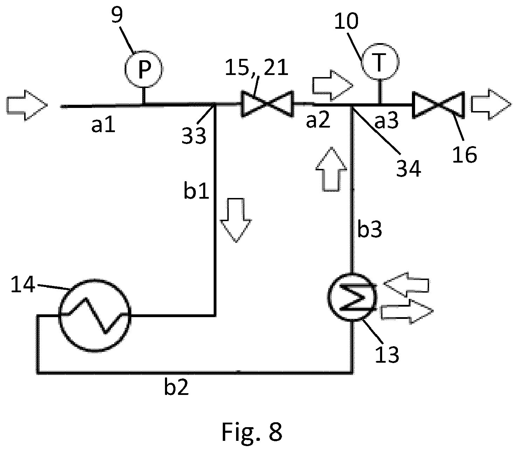

Fig. 8 zeigt schließlich noch eine Ausführungsform, bei der das Schaltelement 15 lediglich durch ein Ventil 21 im Hauptstrom der Entnahmeleitung a2 gebildet wird. -.-.-.

### Bezugszeichenliste

- 1: Kryotank
- 2: Gehäuse
- 3: Entgasungsanschluss
- 4: Füllanschluss
- 5: Überdruckablass
- 6: Überdruckablass
- 7: Füllstandssensor
- 8: Temperatursensor
- 9: Drucksensor
- 10: Temperatursensor
- 11: weiterer Drucksensor
- 12: zweiter Wärmeübertrager
- 13: dritter Wärmeübertrager
- 14: erster Wärmeübertrager
- 15: Schaltelement
- 16: Ventil
- 17: Ventil
- 18: Ventil
- 19: Ventil
- 20: Druckverlustelement
- 21: Ventil
- 22: Ventil
- 23: Heizer
- 31: erste Kryotankvorrichtung
- 32: zweite Kryotankvorrichtung
- 33: erste Abzweigung
- 34: zweite Abzweigung
- a: Entnahmeleitung
- a1: Entnahmeleitung, erster Abschnitt
- a2: Entnahmeleitung, zweiter Abschnitt
- a3: Entnahmeleitung, dritter Abschnitt
- b: Heizleitung
- b1: Heizleitung, erster Abschnitt
- b2: Heizleitung, zweiter Abschnitt
- b3: Heizleitung, dritter Abschnitt
- c: Überdruckleitung
- d: Füllleitung
- e: Entgasungsleitung
- f: Verbindungsleitung

## Patentansprüche

1. Kryotanksystem, umfassend eine erste Kryotankvorrichtung (31) und eine zweite Kryotankvorrichtung (32), wobei die erste Kryotankvorrichtung (31) einen ersten Kryotank (1) und die zweite Kryotankvorrichtung (32) einen zweiten Kryotank (1), insbesondere jeweils zur Aufnahme von Wasserstoff, umfasst, wobei die erste Kryotankvorrichtung (31) eine Entnahmeleitung (a) zum Speisen eines Verbrauchers umfasst und einen Drucksensor (9) zum Messen des Drucks im ersten Kryotank (1), wobei an einer ersten Abzweigung (33) ein Teilstrom der Entnahmeleitung (a) in eine Heizleitung (b) abzweigbar ist, wobei die Heizleitung (b) durch einen im ersten Kryotank (1) angeordneten ersten Wärmeübertrager (14) führt und nach dem ersten Wärmeübertrager (14) an einer zweiten Abzweigung (34) in die Entnahmeleitung (a) zurückführt, wobei die erste Kryotankvorrichtung (31) zumindest ein Schaltelement (15) umfasst, dass dazu eingerichtet ist, dass abhängig von dem durch den Drucksensor (9) gemessenen Druck im ersten Kryotank (1) der erste Wärmeübertrager (14) aktiviert oder deaktiviert wird, wobei der erste Kryotank (1) über eine erste Füllleitung (d) befüllbar ist und der zweite Kryotank (1) über eine zweite Füllleitung (d) befüllbar ist, wobei eine Verbindungsleitung (f) zur Verbindung der ersten Füllleitung (d) mit der zweiten Füllleitung (d) eingerichtet ist.

2. Kryotanksystem nach Anspruch 1,
**dadurch gekennzeichnet, dass** ein zweiter Wärmeübertrager (12) an der Entnahmeleitung (a) zwischen dem ersten Kryotank (1) und der ersten Abzweigung (33) angeordnet ist, wobei der zweite Wärmeübertrager (12) bevorzugt von einem warmen Fluid erwärmt wird, beispielsweise von Wasser oder einer G40 Mischung.

3. Kryotanksystem nach zumindest einem der vorhergehenden Ansprüche,
**dadurch gekennzeichnet, dass** ein dritter Wärmeübertrager (13) an der Heizleitung (b) zwischen dem ersten Wärmeübertrager (14) und der zweiten Abzweigung (34) angeordnet ist, wobei der dritte Wärmeübertrager (13) bevorzugt von einem warmen Fluid erwärmt wird, beispielsweise von Wasser oder einer G40 Mischung.

4. Kryotanksystem nach zumindest einem der vorhergehenden Ansprüche,
**dadurch gekennzeichnet, dass** an der Füllleitung (d), nach der Abzweigung der Verbindungsleitung (f) und vor dem ersten Kryotank (1), ein Ventil (19) vorgesehen ist, und/oder dass an der Verbindungsleitung (f) ein oder zwei Ventile (19) vorgesehen sind.

5. Kryotanksystem nach zumindest einem der vorhergehenden Ansprüche,
**dadurch gekennzeichnet, dass** der erste Wärmeübertrager (14) durch ein Rohr gebildet ist, wobei das Rohr bevorzugt innen und / oder außen Rippen aufweist.

6. Kryotanksystem nach zumindest einem der vorhergehenden Ansprüche,
**dadurch gekennzeichnet, dass** der erste Kryotank (1), zusammen mit dem ersten Wärmeübertrager (14) und bevorzugt auch mit dem zweiten Wärmeübertrager (12), im Inneren eines thermisch isolierenden Gehäuses (2) angeordnet ist, wobei zumindest die Entnahmeleitung (a) das Gehäuse (2) durchdringend nach außen geführt ist, wobei das Schaltelement (15) außerhalb des Gehäuses (2) oder innerhalb des Gehäuses (2) angeordnet ist.

7. Kryotanksystem nach Anspruch 6,
**dadurch gekennzeichnet, dass** der dritte Wärmeüberträger (13) außerhalb oder innerhalb des Gehäuses (2) angeordnet ist und/oder dass der Drucksensor (9) außerhalb oder innerhalb des Gehäuses (2) angeordnet ist.

8. Kryotanksystem nach Anspruch 6 oder 7,
**dadurch gekennzeichnet, dass** das Gehäuse (2) einen Füllanschluss (4) und einen Entgasungsanschluss (3) aufweist, wobei der Füllanschluss (4) mit der Füllleitung (d) und der Entgasungsanschluss (3) mit einer Entgasungsleitung (e) verbunden ist.

9. Kryotanksystem nach zumindest einem der Ansprüche 6 bis 8,
**dadurch gekennzeichnet, dass** zumindest eine der Entnahme-, Füll- und Entgasungsleitung (a, e, d) mit einem das Gehäuse (2) durchdringenden Überdruckablass (5, 6) versehen ist.

10. Kryotanksystem nach zumindest einem der vorhergehenden Ansprüche,
**dadurch gekennzeichnet, dass** die erste Kryotankvorrichtung (31) einen elektrischen Heizer (22) umfasst, wobei der elektrischen Heizer (22) thermisch an den ersten Kryotank (1) angebunden ist und bevorzugt zwischen dem ersten Kryotank (1) und dem Gehäuse (2) angeordnet ist.

11. Kryotanksystem nach zumindest einem der vorhergehenden Ansprüche,
**dadurch gekennzeichnet, dass** das Schaltelement (15) ein 3/2 Wege-Ventil mit einem integrierten Druckverlustelement (20), angeordnet an der ersten Abzweigung (33) oder an der zweiten Abzweigung (34), umfasst.

12. Kryotanksystem nach zumindest einem der Ansprüche 1 bis 10,
**dadurch gekennzeichnet, dass** das Schaltelement (15) zwei Ventile (21), (22) umfasst, nämlich ein Ventil (22) am Eingang zum Druckregelungssystem in der Heizleitung (b1) und das andere Ventil im Hauptstrom in der Entnahmeleitung (a2), oder nämlich ein Ventil (22) am Ausgang vom Druckregelungssystem in der Heizleitung (b3) und das andere Ventil (21) im Hauptstrom in der Heizleitung (a2).

13. Kryotanksystem nach zumindest einem der Ansprüche 1 bis 10,
**dadurch gekennzeichnet, dass** das Schaltelement (15) ein Ventil (22) am Eingang vom Druckregelungssystem in der Heizleitung (b1) und eine hydrodynamische Impedanz (20), zum Beispiel eine Blende, im Hauptstrom der Entnahmeleitung (a2) umfasst, oder ein Ventil (22) am Ausgang vom Druckregelungssystem in der Heizleitung (b3) und eine hydrodynamische Impedanz (20), zum Beispiel eine Blende, im Hauptstrom der Entnahmeleitung (a2).

14. Kryotanksystem nach zumindest einem der Ansprüche 1 bis 10,
**dadurch gekennzeichnet, dass** das Schaltelement (15) ein Ventil (22) im Hauptstrom der Entnahmeleitung (a2) und eine hydrodynamische Impedanz (20), zum Beispiel eine Blende, am Eingang vom Druckregelungssystem in der Heizleitung (b1) umfasst, oder ein Ventil (22) im Hauptstrom der Entnahmeleitung (a2) und eine hydrodynamische Impedanz (20), zum Beispiel eine Blende, am Ausgang vom Druckregelungssystem in der Heizleitung (b3), oder dass das Schaltelement (15) durch lediglich ein Ventil (21) im Hauptstrom der Entnahmeleitung (a2) gebildet wird.

15. Kryotanksystem nach zumindest einem der vorhergehenden Ansprüche,
**dadurch gekennzeichnet, dass** die zweite Kryotankvorrichtung (32) im Wesentlichen baugleich zur ersten Kryotankvorrichtung (31) ausgebildet ist, also die selben anspruchsgemäßen Komponenten aufweist, wie die erste Kryotankvorrichtung (31).
